# FASCICULE DE BREVET EUROPEEN

(11) **EP 0 281 452 B1**
(45) Date de publication et mention de la délivrance du brevet: **11.08.1993**
(21) Numéro de dépôt: 88400307.0
(22) Date de dépôt: 10.02.1988
(51) Int. Cl.: F16J 15/32, F16N 7/00

(54) **Procédé pour traiter des joints d'étanchéité notamment des bagues d'étanchéité à lèvres**
Dichtungsbehandlungsmethode, insbesondere für Radialwellendichtringe
Treatment method for sealings, in particular for lipped sealing rings

(30) Priorité: 10.02.1987 FR 8701605
(43) Date de publication de la demande: 07.09.1988
(73) Titulaire: PROCAL, Société anonyme dite, 52200 Langres (FR)
(72) Inventeur: Bour, Bruno, F-52600 Montlandon (FR)
(74) Mandataire: Nony, Michel

(56) Documents cités:
- EP-A- 0 188 140
- WO-A-82/01445
- GB-A- 2 016 610
- GB-A- 2 151 526
- US-A- 3 941 393
- PATENT ABSTRACTS OF JAPAN, vol. 9, no. 188 (C-295)[1911], 3 août 1985; & JP-A-60 58 479 (PURANINGU K.K.) 04-04-1985
- Idem

## Description

La présente invention est relative à un procédé pour traiter des joints d'étanchéité comportant des portées, en élastomère, destinés à venir en regard d'une pièce fixe ou tournante, l'une au moins des dites portées assurant un contact d'étéchantité avec ladite pièce.

La présente invention est plus particulièrement destinée aux bagues d'étanchéité à plusieurs lèvres selon le préambule de la revendication 1, du type de celles destinées à réaliser l'étanchéité entre une pièce fixe et une pièce tournante, la pièce tournante pouvant être le cas échéant un arbre, la pièce fixe étant alors un alésage du carter, généralement rempli d'huile, à l'intérieur duquel tourne cet arbre. De telles bagues comportent habituellement une armature présentant en section une forme de L dont une branche s'applique avec interposition d'une garniture en élastomère contre la paroi du carter, l'autre branche de l'armature comportant au moins une lèvre d'étanchéité, notamment en élastomère, munie d'une arête d'étanchéité venant en appui contre l'arbre tournant. De telles bagues d'étanchéité à lèvres sont en particulier utilisées dans des moteurs tels que des moteurs de véhicules automobiles. Une bague de ce type est commue de EP-A-0188140.

De telles bagues sont montées à force dans l'alésage du carter, généralement cylindrique, lisse et muni d'un chanfrein d'entrée. La garniture en élastomère de la bague destinée à venir en appui contre l'alésage du carter est, selon le cas, lisse ou nervurée, et dans certains cas, pourvue d'un chanfrein d'entrée prolongé le cas échéant par une partie cylindrique de précentrage.

Pour faciliter l'introduction de la bague dans l'alésage en assurant un glissement correct, il est nécessaire de lubrifier l'ensemble avant le montage.

Cette lubrification est généralement obtenue en huilant l'alésage avec un pinceau, un tampon, un système à gicleur ou bien en trempant au préalable la bague dans de l'huile et en l'égouttant quelques instants avant la mise en place.

Une telle technique présente des inconvénients qui peuvent conduire de façon irrémédiable à un mauvais montage de la bague.

Si par exemple la lubrification de l'alésage est incomplète, la bague d'étanchéité aura tendance à glisser plus facilement dans certaines parties de l'alésage et moins facilement dans d'autres. Il s'en suivra un montage en biais de la bague.

Ce type de défaut est également rencontré lorsque l'alésage dans lequel la bague est montée est horizontal. L'huile aura alors tendance à descendre à la partie basse.

Par ailleurs, dans le cas du montage d'une bague à diamètre extérieur lisse dans un alésage huilé, on constate que l'huile, du fait de l'interférence entre l'alésage et la garniture extérieure en élastomère de la bague, a tendance à être râclée et n'assure plus son rôle de lubrifiant lors du montage.

Ce phénomène a pu être peu réduit en nervurant la face extérieure de la garniture en élastomère mais l'on constate néanmoins, du fait du serrage important de la bague dans l'alésage, un râclage de l'huile.

Ces défauts liés à l'absence localisée d'huile entre la bague et l'alésage provoquent donc la plupart du temps, soit un montage en biais, soit un montage incomplet et donc une augmentation considérable de l'effort de montage voire même un arrachage partiel ou total de la garniture en élastomère de la bague en contact avec l'alésage.

Des problèmes se posent également au niveau de la lèvre d'étanchéité lorsque celle-ci est lubrifiée de manière conventionelle de façon décrite précédemment.

La lèvre d'une telle bague d'étanchéité frotte le plus souvent sur un arbre en acier trempé de forte rugosité sur une zone très étroite correspondant à l'arête d'étanchéité, dans la pratique de l'ordre de 0,1 à 0,3 mm.

Un défaut de lubrification au niveau de l'arête au moment du premier démarrage de l'arbre provoque des brûlures, des usures et des arrachements inégaux de matière sur la lèvre entraînant une détérioration irrémédiable de celle-ci.

On constate en outre que si la lubrification de la lèvre d'étanchéité est effectuée trop longtemps avant la mise en place de la bague, le lubrifiant a tendance à sécher, un démarrage à sec entraînant les conséquences mentionnées ci-dessus.

En outre, aussi bien en ce qui concerne la lèvre d'étanchéité que la garniture en élastomère extérieure, une lubrification par huilage entraîne des risques de mauvais fonctionnement dûs à la pollution de l'huile utilisée ainsi qu'aux salissures engendrées par des coulures d'huile.

Ce problèmes spécifiques liés aux bagues d'étanchéité à lèvres se rencontrent naturellement pour tous les joints d'étanchéité dont une portée en élastomère doit être amenée en contact serré d'étanchéité avec une pièce fixe ou tournante.

Il est connu par ailleurs par US-A-3941393 d'appliquer une pellicule de cire sur la lèvre d'étanchéité d'une bague à lèvre, cette pellicule de cire étant essentiellement destinée à maintenir en position le ressort-jarretière de la bague pendant le transport, mais réalisant également une lubrification de la lèvre pendant les phases de mise en place et de démarrage. Selon ce document l'application de la cire, notamment une cire paraffinique, s'effectue en immergeant la partie de la bague à recouvrir dans un bain de cire fondue. Ce procédé conduit à revêtir aussi bien les portées intérieures que les portées extérieures de la lèvre (ce qui est voulu puisque le ressort doit être recouvert), et amène donc à déposer une quantité importante de lubrifiant qui peut provoquer des salissures en cours de fonctionnement. De plus le bain de cire peut être pollué par des impuretées qui peuvant se déposer ensuite sur la lèvre d'étanchéité.

La présente invention se propose d'éviter par des moyens particulièrement simples et économiques les inconvénients mentionnés ci-dessus.

Le procédé selon l'invention se caractérise essentiellement par le fait que l'on applique sélectivement sur au moins une des portées en élastomère du joint, destinées à venir en regard de la pièce fixe ou tournante, au moins sur la ou les portées destinées à réaliser le contact d'étanchéité, une dispersion ou une solution d'un produit lubrifiant dans un solvant volatil et que l'on procède à un séchage, de préférence par chauffage, de manière à évaporer le solvant.

Selon l'invention, l'application localisée aux portées à traiter est réalisée, par exemple au pinceau, ou au pistolet.

De manière avantageuse on utilise comme solvants volatils du trichloroéthane et du trifluoroéthane, seuls ou en mélange.

Le séchage peut être effectué à température ambiante pendant un temps, par exemple de l'orde de 10 minutes, ce temps de séchage pouvant être réduit jusqu'à une minute en utilisant une température de par exemple 80°C.

Dans un premier mode de mise en oeuvre de l'invention pour des portées en élastomère destinées à venir en regard et respectivement en contact à force sur une partie fixe le produit lubrifiant est avantageusement un vernis à base de PTFE et d'un liant organique.

L'épaisseur du revêtement lubrifiant déposé après séchage est avantageusement comprise entre environ 1 et environ 5 micromètres.

Dans un second mode de mise en oeuvre dans le cas où les portées en élastomère sont destinées à venir en regard et respectivement contact d'une partie tournante, notamment un arbre dans le cas où ladite portée est constituée par la lèvre d'étanchéité d'une bague d'étanchéité à lèvre, le produit lubrifiant est avantageusement une cire ou un produit paraffinique à bas point de fusion, notamment de l'ordre de 30 à 45°C.

L'épaisseur du revêtement lubrifiant déposé après séchage est avantageusement comprise entre environ 1 et environ 20 micromètres.

D'un manière particulièrement avantageuse l'on peut incorporer aux produits lubrifiants avant leur dépose un produit marqueur en lumière ultra-violette permettant de contrôler la présence du traitement.

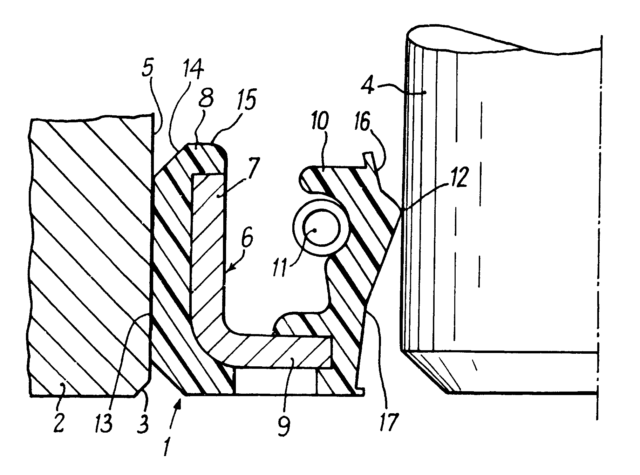

Dans le but de mieux faire comprendre l'invention on va maintenant en décrire un exemple de mise en oeuvre appliqué à une bague d'étanchéité à lèvre illustré sur la figure unique du dessin.

La bague illustrée sur la figure, désignée globalement par 1 est mise en place dans un alésage d'un carter désigné globalement par 2 et présentant un chanfrein d'extrémité 3.

La bague est engagée à emmanchement serré entre la paroi 5 de l'alésage et la portée périphérique de l'arbre 4.

La bague comporte une armature 6 sensiblement en forme de L dont une première branche 7 revêtue d'une garniture en élastomère 8 réalise l'appui contre la portée 5 du carter 2. L'autre branche 9 porte une lèvre d'étanchéité 10, également en élastomère, identique ou différent de celui constituant la garniture 8, cette lèvre étant contrainte par un ressort 11 à s'appliquer par une arête d'étanchéité 12 contre l'arbre 4.

La garniture 8 comporte une portée extérieure 13 qui, dans l'exemple illustré, est lisse mais qui peut également être nervurée et qui vient en appui contre la portée 5 de l'alésage du carter 2.

Dans l'exemple illustré, la garniture 8 comporte également une portée formant chanfrein d'entrée 14 prolongée par une partie frontale cylindrique de précentrage 15.

Selon la présente invention, on applique avant l'introduction de la bague dans l'alésage et, de préférence, lors de la fabrication de celle-ci sur la portée 13 de la garniture 8, et de préférence également sur la portée 14 et son prolongement 15, une dispersion présentant la composition suivante :
Produit lubrifiant : Fluon L 168 (I.C.I) 5 % en poids
Solvant volatil : Trifluoroéthane 95 % en poids

L'application se fait par exemple au pinceau.

On applique par ailleurs sur l'arête d'étanchéité 12 de la lèvre d'étanchéité es les portées adjacentes 16,17 une solution présentant la composition suivante :
Produit paraffinique : coupage 50/50 paraffine/huile de paraffine 8 % en poids
Solvant : trichloroéthane 92 %
On procède à un séchage à 23°C et pendant un temps de deux heures ou plus jusqu'à évaporer les solvants des produits déposés respectivement sur la garniture 8 et la lèvre 109, les revêtements après séchage ayant des épaisseurs respectives de 3 µm sur la garniture 8 et de 10 µm sur la lèvre 10.

Afin de contrôler l'application, on a au préalable introduit dans la dispersion et la solution à appliquer un produit marqueur en lumière ultra-violette tel que par exemple de la fluoresceine.

Le revêtement appliqué sur la garniture 8 et notamment sur sa portée externe 13 réalise un bon glissement de la bague contre la portée 5 de l'alésage lors de l'introduction de la bague évitant tout endommagement de la garniture et tout risque de montage en biais de la bague.

Le revêtement appliqué sur la lèvre d'étanchéité évite les phénomènes dommageables entraînés par un démarrage à sec dans la mesure où dès le début de la rotation de l'arbre 4 la température du produit lubrifiant dont elle est revêtue ( cire ou produit paraffinique) dépasse la température de fusion au niveau de l'arête d'étanchéité et à proximité immédiate de celle-ci entraînant la fusion du produit lubrifiant qui assure pendant un certain temps une fonction efficace de lubrification, par exemple pendant un temps de 10 minutes pour une rotation de 6000 tours par minute.

Il est clair que, bien que dans l'exemple illustré on ait appliqué des revêtements lubrifiants sur les portées concernées de la garniture et sur celles de la lèvre, il est possible dans des applications particulières de n'appliquer un revêtement que sur les portées concernées de la garniture ou sur celles de la lèvre.

## Revendications

1. Procédé de traitement d'une bague d'étanchéité à lèvres comprenant une armature (6) dont une branche (7) comporte une garniture en élastomère (8) destinée à s'appliquer à force par sa portée extérieure (13) contre une portée fixe (5), l'autre branche (9) comportant au moins une lèvre d'étanchéité en élastomère (10) comportant une arête d'étanchéité (12) définie entre des portées adjacentes (16,17) et destinée à s'appliquer contre un arbre tournant (4), caractérisé par le fait que l'on met en place un revêtement lubrifiant sur la portée extérieure (13) de la garniture (8) et/ou un revêtement lubrifiant sur la ou les lèvres d'étanchéité (10), au moins sur l'arête d'étanchéité (12), et de préférence également sur les portées adjacentes (16,17), le ou lesdits revêtements étant mis en place par application sélective d'une dispersion ou d'une solution d'un produit lubrifiant dans un solvant volatil, suivie d'un séchage, de préférence par chauffage, de manière à évaporer le solvant.

2. Procédé selon la revendication 1, caractérisé par le fait que l'on utilise comme solvant volatil du trichloroéthane et du trifluoroéthane seuls ou en mélange.

3. Procédé selon l'une quelconque des revendications 1 et 2, caractérisé par le fait que pour le revêtement de la portée extérieure (13) le produit lubrifiant est un vernis à base de PTFE et d'un liant organique.

4. Procédé selon la revendication 3, caractérisé par le fait que l'épaisseur du revêtement lubrifiant déposé après séchage est comprise entre environ 1 et environ 5 micromètres.

5. Procédé selon l'une quelconque des revendications précédentes, caractérisé par le fait que pour le revêtement de la ou des lèvres d'étanchéité (10) le produit lubrifiant est une cire ou un produit paraffinique à bas point de fusion, en particulier de l'ordre de 30 à 45°C.

6. Procédé selon la revendication 5, caractérisé par le fait que l'épaisseur du revêtement lubrifiant déposée après séchage est comprise entre environ 1 et environ 20 micromètres.

7. Procédé selon l'une quelconque des revendications précédentes, caractérisé par le fait que l'on incorpore au produit lubrifiant avant sa dépose un produit marqueur en lumière ultraviolette.

## Claims

1. A process for treating a lipped sealing ring comprising a reinforcement (6), one leg (7) of which comprises an elastomeric covering (8) intended to be forcibly applied with its external bearing surface (13) against a fixed bearing surface (5), the other leg (9) comprising at least one elastomeric sealing lip (10) including a sealing edge (12) defined between adjacent surfaces (16, 17) and intended to be applied against a rotating shaft (4), characterised in that a lubricating coating is provided on the external bearing surface (13) of the covering (8) and/or a lubricating coating is applied to the sealing lip or lips (10), at least on the sealing edge (12), and preferably also on the adjacent surfaces (16, 17), the coating or coatings being provided by the selective application of a dispersion or a solution of a lubricating product in a volatile solvent, followed by drying, preferably by heating, so as to evaporate the solvent.

2. A process according to claim 1, characterised in that trichloroethane and trifluoromethane, singly or in admixture, are used as the volatile solvent.

3. A process according to one of claims 1 and 2, characterised in that the lubricating product for coating the external bearing surface (13) is a lacquer based on PTFE and an organic binder.

4. A process according to claim 3, characterised in that the thickness of the lubricating coating deposited after drying is between about 1 micron and about 5 microns.

5. A process according to any one of the preceding claims, characterised in that the lubricating product for coating the sealing lip or lips (10) is a wax or a paraffin product of low melting point, particularly of the order of 30 to 45°C.

6. A process according to claim 5, characterised in that the thickness of the lubricating coating deposited after drying is between about 1 micron and about 20 microns.

7. A process according to any one of the preceding claims, characterised in that an ultraviolet light marker product is incorporated in the lubricating product before it is deposited.

## Patentansprüche

1. Verfahren zum Behandeln eines Lippendichtungsrings mit einer Armierung (6), deren einer Arm (7) eine Elastomer-Bewehrung (8) aufweist, die mit ihrem Außenbereich (13) kraft-schlüssig an einem festen Bereich (5) anliegt, und deren anderer Arm (9) mindestens eine Elastomer-Dichtlippe (10) mit einer zwischen benachbarten Bereichen (16, 17) definierten Dichtkante (12) zur Anlage an einer umlaufenden Welle (4) trägt, dadurch gekennzeichnet, daß auf den Außenbereich (13) der Armierung (8) und/oder auf die Dichtlippe(n) (10), mindestens auf die Dichtkante (12), und vorzugsweise auch auf die benachbarten Bereiche (16, 17) ein Gleitmittel-Überzug aufgetragen wird, wobei der bzw. die Überzüge durch selektiven Auftrag einer Dispersion oder Lösung aus einem Gleitmittel in einem flüchtigen Lösungsmittel aufgebracht wird, woraufhin vorzugsweise durch Erwärmen getrocknet wird, um das Lösungsmittel zu verdampfen.

2. Verfahren nach Anspruch 1, dadurch gekennzeichnet, daß als flüchtiges Lösungsmittel Trichlorethan oder Trifluorethan oder ein Gemisch davon verwendet wird.

3. Verfahren nach Anspruch 1 oder 2, dadurch gekennzeichnet, daß das Gleitmittel für den Überzug des Außenbereichs (13) ein Lack auf der Basis von PTFE und einem organischen Lösungsmittel ist.

4. Verfahren nach Anspruch 3, dadurch gekennzeichnet, daß die Dicke des aufgetragenen Gleitmittel-Überzugs nach dem Trocknen zwischen etwa 1 und etwa 5 µm liegt.

5. Verfahren nach einem der vorhergehenden Ansprüche, dadurch gekennzeichnet, daß das Gleitmittel für den Überzug der Dichtlippe(n) (10) ein Wachs oder ein paraffinhaltiges Erzeugnis mit niedrigem Schmelzpunkt, insbesondere in der Größenordnung von 30 bis 45°C, ist.

6. Verfahren nach Anspruch 5, dadurch gekennzeichnet, daß die Dicke des aufgetragenen Gleitmittel-Überzugs nach dem Trocknen zwischen etwa 1 und etwa 20 µm liegt.

7. Verfahren nach einem der vorhergehenden Ansprüche, dadurch gekennzeichnet, daß in das Schmiermittel vor dem Auftrag ein Ultraviolettlicht-Markierstoff eingebaut wird.
